Europäisches Patentamt

European Patent Office

Office européen des brevets

(11) Publication number: **0 327 261**
**A1**

## (12) EUROPEAN PATENT APPLICATION

(21) Application number: **89300771.6**

(22) Date of filing: **26.01.89**

(51) Int. Cl.⁴: **E04C 2/26 , E04C 2/38 ,**
**B29C 63/00 , B29C 63/04**

(30) Priority: **30.01.88 GB 8802100**
**18.02.88 GB 8803791**

(43) Date of publication of application:
**09.08.89 Bulletin 89/32**

(84) Designated Contracting States:
**AT BE CH DE ES FR GB GR IT LI LU NL SE**

(71) Applicant: **ECOMETAL LIMITED**
**63 Beardmore Way Clydebank Industrial**
**Estate**
**Clydebank Glasgow G81 4HT(GB)**

(72) Inventor: **McQuire, James Iain**
**63 Beardmore Way Clydebank Industrial**
**Estate**
**Clydebank Glasgow G81 4HT(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) **Building panels.**

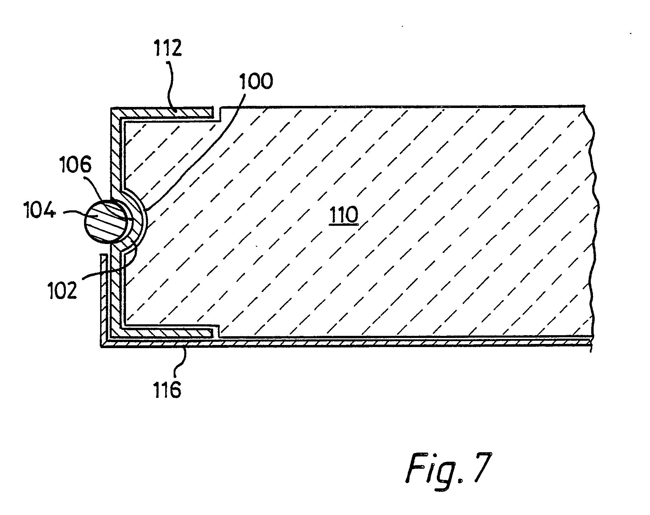

(57) A building panel, particularly suited for roofs, is made of a rock fibre insulated slab (10) formed with edge rebates (18, 20) to which are fitted rigid channel members (12, 14). A shallow tray (16) is then secured by spray adhesive under the slab so that its upturned edges engage the sides of the reinforcing channel members. Indented ribs (106, Figure 7) in modified channel members (112) may engage in grooves (100) formed by routing the sides of the slab (110), and a round Neoprene sealing strip (104) is then fitted between the indented ribs of abutting panels to form a sealed assembly of panels.

Fig.2

## Building Panels

### Field of the invention

This invention concerns building panels and in particular a method of manufacture of a thermal insulating building panel.

### Background to the invention

It is known to sandwich insulation material between two sheets of semi-rigid or rigid material such as plastics wood or metal, but for longer spans a more rigid configuration is needed if bowing and buckling is not to result.

The present invention seeks to provide a building panel which can be used in either a horizontal or an inclined mode, has a high thermal insulation value and simplicity of fixing. Whilst one face of the panel may be required to provide an internal decorative finish, the panel must be capable of being secured to purlins or other supports to provide an inner skin for a roof and to provide a fixing for tiling battens (with or without counter battens) to enable a weather-proof exterior finish of the tiles or slates to be fitted simply and quickly.

The roofing panel of the present invention is particuarly useful in Mansard roof construction but is in no way limited to such applications.

### Summary of the invention

According to one aspect of the present invention a method of constructing a roofing panel comprises the steps of: forming a rectangular slab of thermal insulating material whose dimensions are commensurate with those of the final panel; removing material from each edge region of the upper and lower faces adjoining the longer edges of the slab so as to define four shallow rebates; fitting over the rebates at each edge region a rigid channel-section member whose thickness corresponds to the depth of the rebate, so that the members are flush with the said upper and lower faces; and securing to said lower face a shallow tray of a length corresponding to that of the slab, such that upturned side edges of the tray engage said channel members.

The channel section members may be formed by pressing, rolling or extruding metal or plastics material.

The tray may conveniently be formed by bending from sheet metal or by extrusion or moulding plastics materials.

The tray may be secured to the assembly of the slab and channel section member by means of an adhesive.

Typically the adhesive is a spray-on adhesive and the method includes the step of spraying the adhesive on the underside of the panel (or on the inside of the tray) or both, prior to fitting the tray to the underside of the assembly.

The method may further include the step of rivetting or stapling or otherwise securing the upturned edges of the tray to the channel section members.

Where metal is employed from the channel section members and/or the tray, the metal is preferably protected by means of paint or galvanising or the like so as to prevent corrosion as by rusting.

The channel section members and the tray may be formed from plastics materials, or wood, or metal on any construction thereof.

The slab of insulating material may be formed from rock fibre, although the invention is not limited to the use of this particular insulating material.

Where a rock fibre slab and metal members are employed, the adhesive, if employed, is preferably a hot spray Neoprene adhesive.

Whilst the use of adhesive is not essential, it has been found preferable where thin material is used for the tray so as to prevent separation occuring between the slab and the tray, and the resultant sagging.

In a preferred arrangement the underside of the insulating material slab may be covered by aluminium foil, which may be heat sealed to the underside surface. The foil is preferably applied after the routing step and before the channel section members are fitted to the rebated edges of the slab.

The rebating of the upper and lower faces of the slab along its two longer edges, is conveniently achieved by routing, and the method as described typically includes the step of routing the longer edges of the upper and lower faces of the slab to a depth just sufficient to accommodate the thickness of the material from which the channel section members are formed, and which are to be subsequently fitted to the slab.

According to a preferred feature of the invention, the two parts of each channel section member which after fitting are to occupy the routed rebates of the upper and lower faces of the slab, are caused to splay inwards during manufacture so as not to be quite parallel. By incorporating this feature, the channel section members can be made to firmly grip the edge regions of the slab and will stay in place during assembly without the need for an adhesive or rivetting or the like.

In the event that a double skin is required, a second shallow tray the longer edges of which are downturned, may be fitted to the uncovered face of the slab in the same way as the first shallow tray is fitted to the underside thereof. A suitable adhesive may if appropriate be incorporated. As before rivets or the like may be incorporated to secure the edges of the second tray to the channel section members secured to the edges of the slab.

Where two such trays are to be fitted, the upturned side edges of the trays are preferably dimensioned so as not to extend by more than half the thickness of the slab so that the upturned side edges do not interfere with one another as the two trays are fitted to the top and bottom of the slab.

The material and construction of the upper and lower trays may be different. Thus for example a waterproof material or plastics tray may be fitted to the upper (external) face and an expanded metal mesh tray may be fitted to the lower (internal) face to permit an internal plaster finish to be applied.

The invention also lies in a panel when made in accordance with the above method or any variation thereof as described herein.

The invention also lies in a roofing structure comprising support members on which panels (constructed in accordance with the invention) are secured by means of nails, screws, pins or other fixing means driven through the channel section members forming the re-inforced edge regions of the panel, so as to secure the panels to the support members. The latter may be of timber or metal or both. The channel section members overlying the edge regions of the panel may be apertured at regular intervals along their length to facilitate the fixing of the panels to the support members.

The upturned side edges of the tray and the bridging parts of the channel section members may be perforated at similar positions and spacing so that the apertures align when the tray and channel section members are fitted to the slab, to admit securing screws, pins, rivets or the like, to be fitted.

In use a building panel as herein described, in which one face of the thermal insulation material is exposed and the other is covered by a tray, is fitted to rafters or purlins with the tray in contact with the rafters or purlins so as to present a finished underside to the interior of the building. Battens may then be attached to the abutting re-inforced edge regions of the adjoining panels by means of pins, nails, screws or other form of fixing, to enable tiles or the like to be secured to the battens, in manner known per se, to present a weather proof external finish.

Where the surface of the panel below the tiles is exposed (as opposed to being covered by a metal or plastics tray), a sheet of waterproof material, typically a breather membrane, is laid over the panels before the battens are secured in place.

By using metal of appropriate thickness, so each panel can be rendered sufficiently rigid and strong to enable it to span any particular desired distance and using 2.00 millimetre thick galvanised steel channel, with a 0.55 millimetre thick coated steel lining tray, spans of up to 4 metres can be achieved without difficulty, using slabs of insulating material some 500 millimetre wide.

Whilst the insulation slab does not contribute to any large extent to the rigidity of the resulting composite panel, the thickness of the slab material does have a significant effect on the thermal and sound resistance of the panel. Typically the thickness of the thermal insulating material is in the range 50 to 120 millimetres. U values as low as 0.27 have been achieved with high quality rock fibre of 120 millimetres thickness.

In view of the structural rigidity of the edge regions of each panel, the latter may provide anchorages for guttering, soffit and at the other end ridge coverings and the like.

Although not essential, the panels may be constructed to a standard width, 500 millimetres, for ease of handling and job planning.

Although the invention can be used with timber purlins and the like, it is of particular advantage where a metal framed structure forms the basis of the building and metal purlins have been provided to support a roof, particularly a Mansard style roof. Previously jack rafters and timber plates have been necessary to provide a support for insulation panels on which a breather membrane and timber battens have then had to be secured, before tiling can be effected. The invention does away with the jack rafters and insulation boards and allows a roof to be constructed quickly and easily, enabling tiling to be achieved within a very short space of time after work on the roof has begun.

Whilst panels according to the invention are most simply secured so as to extend length-wise between upper and lower metal purlins, with the reinforced edge regions of the panels in abutting relationship so as to provide immediate support for tiling battens, the panels may just as easily be laid horizontal, provided steel rafters are provided at appropriate intervals between the upper and lower purlins to provide support for the ends of the horizontally laid panels. In this latter configuration, counter battens will normally be required to support the tiling battens.

The channel section members and the trays may be formed from aluminium or galvanised steel, and the fixings used to secure the channel sections to supporting structures of metal or timber may be formed from stainless steel or carbon steel, so that where for example a steel structure is employed as the basic support for the roof panels, true metal to metal connection is possible.

Although the external weather-proofing finish has been previously described as being tiled, it is to be understood that slates may be substituted.

It will be seen that by incorporating edge channel section members and a separate undertray, the quantity of material needed to give the panel sufficient rigidity to span considerable distances, is kept to the absolute minimum.

Thus the edge regions are encased in strong rigid channel sections of appropriate thickness material, whilst the underside is simply clad, for example by a thin metal or plastics sheet which may be coloured to provide an immediate internal finish, or perforated to allow for a plaster finish, without any loss in rigidity and with little increase in overall weight.

Other features of the invention are defined in the appended claims.

Brief description of the drawings

The invention will now be described, by way of example only, with reference to the accompanying drawings in which:

Figure 1 is a perspective view of a completed building panel constructed in accordance with the invention;

Figure 2 is an enlarged transverse view in cross-section of the left-hand end of the front edge of the panel shown in Figure 1 indicating the rebates in the panel material, the fixing of a channel section edge member thereto, and the fixing of the undertray to the completed assembly;

Figure 3 illustrates how elongate panels constructed in accordance with the invention can be fitted between upper and lower purlins to provide a support for battens before tiling;

Figure 4 is a side view of the roof assembly shown in Figure 3 and shows how the battens are attached to counter battens and also indicates how a gutter and insulated soffit panel can be attached to the underside of the lower edge of the roof so formed;

Figure 5 illustrates how, with appropriate steel rafters, the panels of the invention can be laid horizontally and again tiled using counter battens and tiling battens in known manner;

Figure 6 is a cut away perspective view showing how panels can be attached direct to steel work and without the need for counter battens, and how tiling battens can be secured directly thereto, if desired; and

Figure 7 is a transverse cross-sectional view of a modified building panel which incorporates a sealing strip.

Detailed description

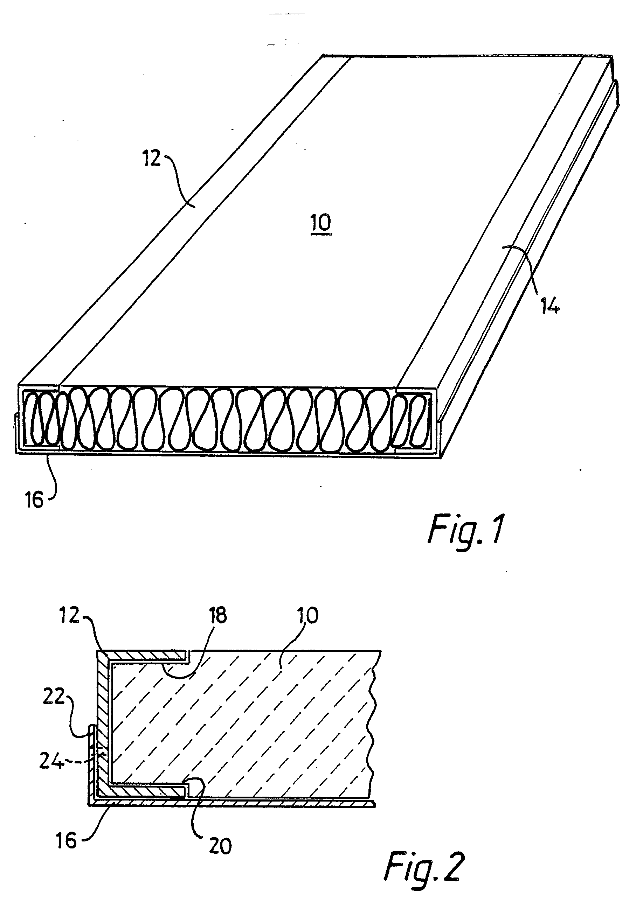

Figure 1 of the drawings shows a completed building panel manufactured in accordance with the invention. The panel comprises a slab 10 of thermal insulating material, typically high density rock fibre the longer edges of which are reinforced by channel-section members 12 and 14 of steel or other rigid material, and a tray of thin material such as sheet steel or the like, which may be coloured as by painting for protection and decor, fitted to the underside of the assembly.

Figure 2 indicates the method of constructions in more detail. To this end the slab 10 is rebated as by routing at 18 and 20 to accommodate the thickness of the upper and lower limbs of each channel section member such as 12. Although not shown, the opposite edge of the slab 10 is similarly rebated to accommodate the upper and lower limbs of the other channel section member 14. In this way the top and bottom faces of the panel, when fitted with the channels 12 and 14, are flush and flat.

A shallow tray of thin metal or plastics material 16 is fitted to the flat underside of the composite panel with the upturned edges (one of which is shown at 22), being secured to the vertical part of the channel-section member 12 by means of rivets or pins or other fixing devices, one of which is shown diagrammatically at 24.

In order to reduce the risk of separation, the tray 16 is bonded to the underside surface of the slab 10 by means of an adhesive, such as a hot Neoprene adhesive, and the latter is preferably applied, as by spraying, to the underside of the slab 10 before the tray 16 is fitted in place.

Although not shown, a second similar cooperating tray may be fitted to the topside of the panel, if desired, and secured in place in a similar manner as described with reference to tray 16. However it is not envisaged that this modification will prove necessary in many applications.

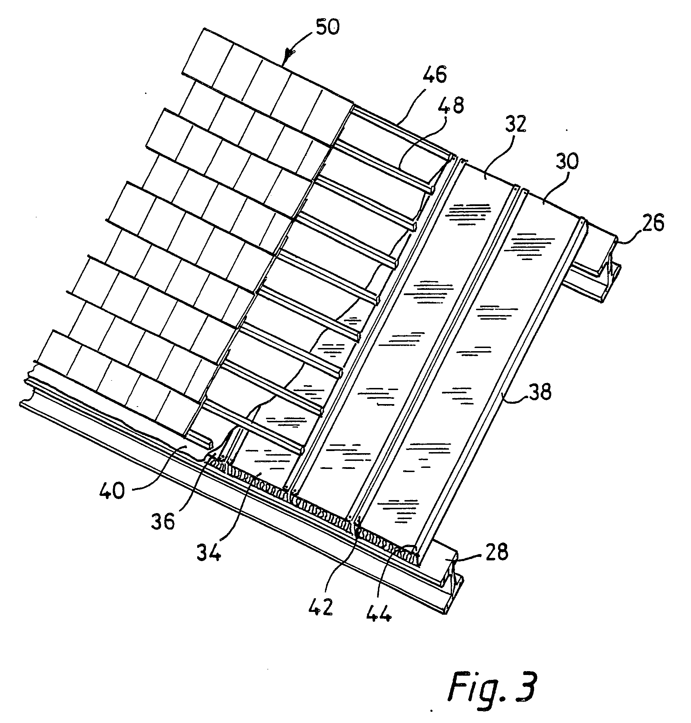

Figure 3 illustrates upper and lower steel purlins 26 and 28 respectively between which extend a number of elongate panels constructed in accordance with the invention. The latter are denoted by reference numerals 30, 32, 34 and 36. The reinforced edges of the panels can be seen as at 38, and a breather membrane 40 (shown cut away to assist in an understanding of the drawing) is shown laid over the abutting panels. The panels are secured to the steel purlins 26 and 28 by means of pins, rivets, screws or the like which are shown diagrammatically by way of example at 42 and 44.

Counter battens (not shown) may be secured to some or all of the abutting edges of the panel by means of pins, rivets, screws or the like, and tiling battens as at 46 and 48 may be laid over the counter battens and secured thereto as by nails or the like before tiling commences. Tiles or slates generally designated 50, are laid on the tiling battens in a convention manner and secured thereto by way of pins or other conventional fixings.

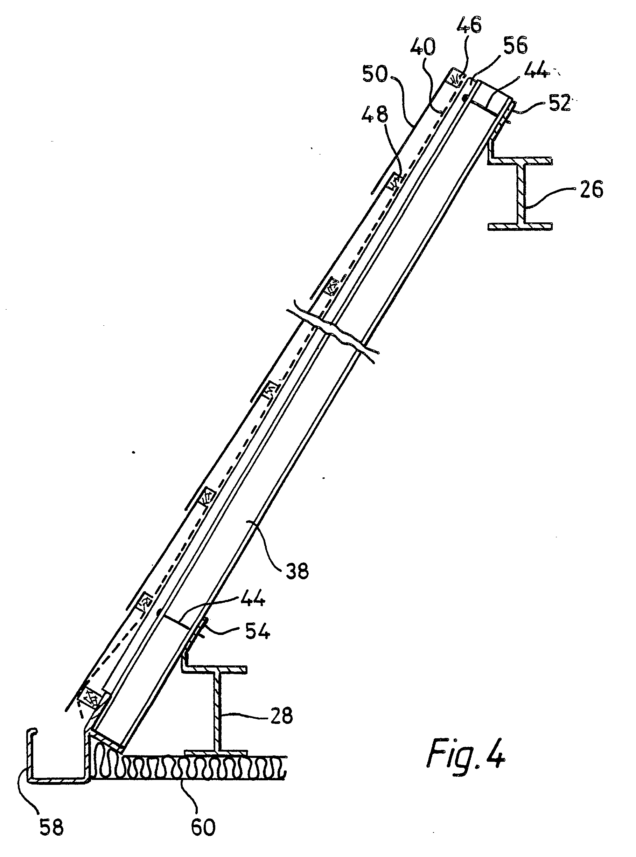

Figure 4 illustrates the construction in more detail. The reinforced edge 38 of the panel spans between the upper and lower purlins 26 and 28 which, as shown in more detail in this figure, include upstanding inclined support flanges 52 and 54.

Counter battens are shown at 56 and are secured to the reinforced edges of the panels such as 38, and a breather membrane 40 is shown overlying the counter battens, below the tiling battens 46 and 48, to which the tiles or slates are attached in known manner.

At the lower end of the roof fall, a plastics or aluminium gutter 58 (painted if required) is secured to the lower regions of the reinforced edges 38 of the panels, by means of pins, screws or the like. An insulated soffit panel 60 is secured to the underside of the lower purlin 28, to extend to the gutter 58.

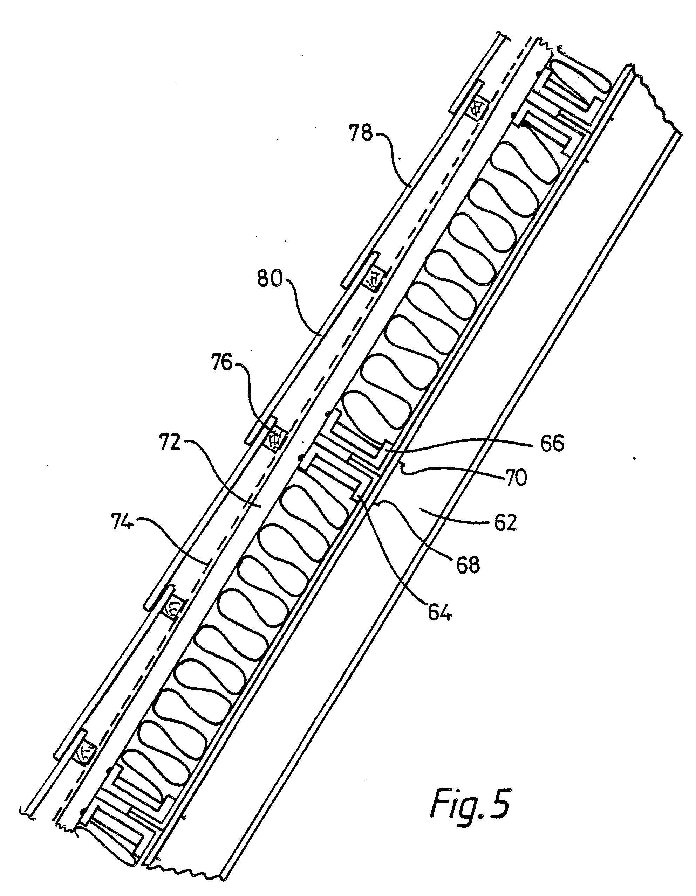

Figure 5 illustrates how the panels can be laid in a generally horizontal mode using steel rafters as at 62. The reinforced panel edges 64 and 66 are now secured by pins 68 and 70 to the steel rafters, and counter battens 72, a breather membrane 74, and tiling battens 76 are secured to the horizontally running reinforced edge regions of the panels again as by pins or the like. Once the counter battens are in place, the tiling battens can of course be secured to the counter battens by ordinary nails or other conventional fixings if desired.

Tiles or slates such as 78 and 80 are secured to the tiling battens in conventional manner.

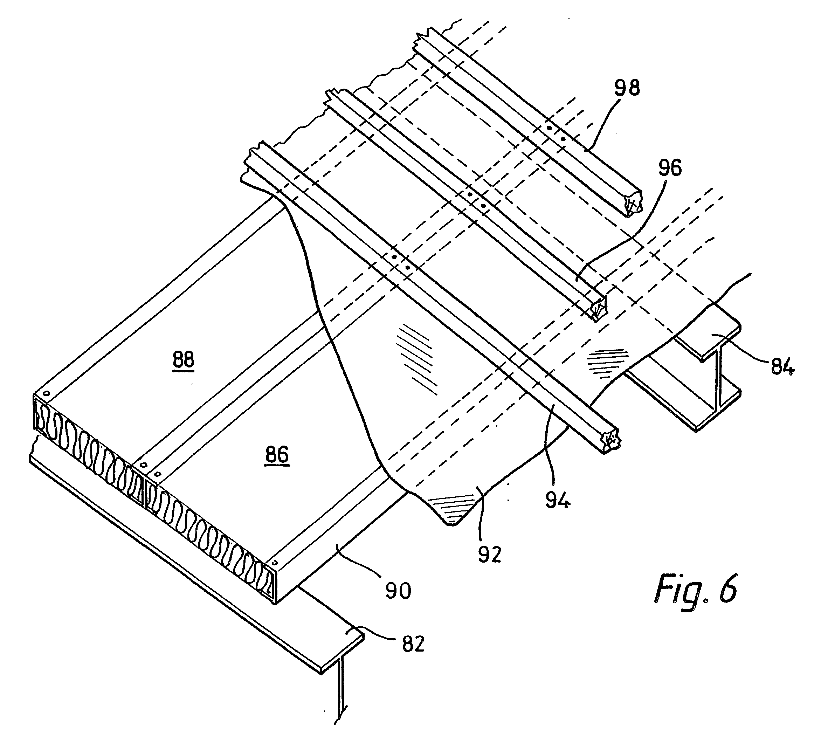

Figure 6 illustrates a simpler form of construction which does not need counter battens. Again two steel purlins 82 and 84 support elongate panels 86 and 88 having reinforced edge regions such as 90.

A breather membrane 92 is laid over the assembly of panels and tiling battens as at 94, 96 and 98 are secured directly to the reinforced edge regions 90 by means of pins, screws or the like through the membrane. Tiles or slates (not shown) are secured to the tiling battens in conventional manner.

Figure 7 shows a modified completed panel. The panel comprises a slab 110 of thermal insulating material typically high density rock fibre the longer edges of which are reinforced by channel section members 112 of steel or other rigid material, only one such member being shown, and a tray 116 of thin material such as sheet steel or the like, which may be coloured as by painting for protection and decor, fitted to the underside face of the assembly.

The basic steps in the method of manufacture of the modified panel are similar to those described above.

The longitudinal edge face of the slab 110 is grooved by routing, as indicated at 100, and the channel member 112 is correspondingly indented to produce a rib 102 which engages into the groove 100 in the slab when the channel member is fitted to the slab.

A round sealing strip 104 of closed cell neoprene is accommodated in the aperture defined by two opposed ribs 102 when two panels are butted together at their longitudinal edge faces, and the strip is dimensioned to be compressed by about 20% at this time.

Various modifications of the above-described and illustrated arrangements of panel are possible within the scope of the invention.

**Claims**

1. A method of constructing a building panel characterised by the steps of: forming a rectangular slab (10) of thermal insulating material whose dimensions are commensurate with those of the final panel; removing material (18, 20) from each edge region of the upper and lower faces adjoining the longer edges of the slab so as to define four shallow rebates; fitting over the rebates at each edge region a rigid channel-section member (12, 14) whose thickness corresponds to the depth of the rebate, so that the members are flush with said upper and lower faces; and securing to said lower face a shallow tray (16) of a length corresponding to that of the slab, such that upturned side edges of the tray engage said channel members.

2. A method according to claim 1 characterised in that the securing of the tray includes the step of spraying an adhesive on to the lower face of the slab and/or the inside of the tray prior to fitting thereof.

3. A method according to claim 1 or claim 2 and further characterised by the step of securing the upturned edges of the tray to the channel-section members by rivetting (24) or the like.

4. A method according to any one of claims 1 to 3 further characterised by the step of heat sealing to said lower face a layer of aluminium foil.

5. A method according to any one of claims 1 to 4 characterised in that each said channel member is caused prior to fitting to splay inwards so as not to be quite parallel, thereby to firmly grip the rebates of the slab when fitted.

6. A method according to any one of claims 1 to 5 further characterised by the step of securing to said upper face a second shallow tray whose longer side edges are downturned.

7. A method according to any one of claims 1 to 6 characterised in that the edges of the tray and the corresponding bridging parts of the channel members are formed with aligned apertures into which are fitted fasteners (44) for securing the panel to supporting structure.

8. A method according to any one of claims 1 to 7 further characterised by the step of removing material from each said longer edge of the slab between rebates to form a groove (100), each channel member having a corresponding inwardly indented rib (102) for engaging the respective groove.

9. The combination of at least two panels each constructed by the method of claim 8, characterised in that the panels are arranged in adjacent edge-to-edge relationship, and a compressible sealing strip (104) of substantially circular cross-section is located between each pair of adjacent indented ribs (102) of the channel members.

10. A building panel characterised in that it is constructed by the method of any one of claims 1 to 8.

*Fig.1*

*Fig.2*

*Fig. 3*

Fig. 4

Fig.5

EP 0 327 261 A1

*Fig. 6*

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 145 604 (BPB INDUSTRIES LTD) * Page 3, line 35 - page 6, line 4; figures 1-8 * | 1,2,6,8 ,10 | E 04 C 2/26 E 04 C 2/38 B 29 C 63/00 B 29 C 63/04 |
| Y | US-A-2 240 487 (BENHAM) * Page 3, column 1, line 24 - column 2, line 4; page 3, column 2, lines 46-66; page 4, column 2, lines 25-28; figures 6,7 * | 1,2,6,8 ,10 | |
| A | FR-A- 752 404 (ETABLISSEMENTS COINDET) * Page 1, lines 38-56; page 2, lines 40-44; figures 1,2 * | 1-3,10 | |
| A | BE-A- 719 831 (INDUSTRIAL GATES LTD) * Page 2, line 6 from the bottom - page 3, line 10; figures 1,2 * | 5 | |
| A | DE-A-1 808 077 (METALGESELLSCHAFT AG) * Page 15, lines 1-9,22-28; page 16, lines 24-29; figures 1,2,5,6 * | 1,7,10 | |

TECHNICAL FIELDS SEARCHED (Int. Cl.4)

E 04 C
B 29 C

The present search report has been drawn up for all claims

| Place of search | Date of completion of the search | Examiner |
|---|---|---|
| THE HAGUE | 27-04-1989 | DE COENE P.J.S. |